# EUROPÄISCHE PATENTSCHRIFT

(11) **EP 0 898 154 B1**
(45) Veröffentlichungstag und Bekanntmachung des Hinweises auf die Patenterteilung: **03.11.2004**
(21) Anmeldenummer: 98202802.9
(22) Anmeldetag: 20.08.1998
(51) Int. Cl.: G01G 11/00, G01N 5/04

(54) **Verfahren zum Bestimmen des Flüssigkeitsgehalt in Granulat, sowie ein Verfahren zum Dosieren eines Granulats unter Anwendung einer Korrektur für den Flüssigkeitsgehalt**
Method of determining the quantity of liquid in granulate, as well as a method of dosing a granulate using a correction for the quantity of liquid
Procédé de détermination de la quantité de liquide dans le granulat ainsi qu'un procédé pour doser un granulat utilisant une correction pour la quantité de liquide

(30) Priorität: 20.08.1997 NL 1006807
(43) Veröffentlichungstag der Anmeldung: 24.02.1999
(73) Patentinhaber: Kaliwaal-Bijland B.V., 6019 AA Wessem (NL)
(72) Erfinder: Melis, Wihelmus Jacobus Maria, 6041 TL Roermond (NL)
(74) Vertreter: Volmer, Johannes Cornelis

(56) Entgegenhaltungen:
- EP-A- 0 095 293
- DE-A- 3 411 495
- DE-B- 1 068 917
- GB-A- 1 064 943
- US-A- 4 430 963
- US-A- 4 750 434
- PATENT ABSTRACTS OF JAPAN vol. 006, no. 217 (P-152), 30. Oktober 1982 & JP 57 122321 A (SHIN NIPPON SEITETSU KK;OTHERS: 02), 30. Juli 1982

## Beschreibung

Die vorliegende Erfinding bezieht sich auf ein Verfahren zum Bestimmen des Flüssigkeitsgehalts in einem Granulat, insbesondere Sand und/oder Kies, das im wesentlichen unlöslich in der Flüssigkeit und inert für die Flüssigkeit ist.

In dem Stand der Technik wird der Flüssigkeitsgehalt eines derartigen Granulats in verschiedenen Weisen bestimmt. So ist es allgemein bekannt, und zum Beispiel in der DE- A-1 068 917 beschrieben, eine Granulatprobe mit einem bekannten Volumen abzuwiegen, anschließend zu trocknen und erneut zu wiegen, die sogenannte "Wiegen-Trocknen-Wiegen"-Technik. Der Gewichtsunterschied entspricht dann dem Gewicht der Flüssigkeit in der betreffenden Probe. Derartige Messungen sind aber ein einmaliges Indiz für den Flüssigkeitsgehalt in dem Granulat. Ein eventuell variierender Flüssigkeitsgehalt in dem Granulat kann nur durch ein vielfältiges Wiederholen der obengenannten "Wiegen-Trocknen-Wiegen"-Technik bestimmt werden. Das Entnehmen mehrerer Proben an unterschiedlichen Zeitpunkten und das Durchführen von Messungen an diesen Proben ist derzeit notwendig, wenn man das Granulat zum Beispiel in einem kontinuierlichen Strom bearbeiten will, wobei der Flüssigkeitsgehalt eine große Rolle spielt, und dies variieren kann. Meistens muß die Bearbeitung unterbrochen werden, und kann diese, erst nachdem die Daten der Betreffenden Messung bekannt sind, fortgesetzt werden. Eine kontinuierliche Bearbeitung ist dann kaum möglich; hierzu ist eine kontinuierliche Korrektur des Flüssigkeitsgehalts unentbehrlich.

DE 34 11 495 A1 beschreibt ein Verfahren und eine Vorrichtung zur Messung des Feuchtigkeitsgehalts eines pulverförmigen, staubförmigen, pelletförmigen oder rieselfähigen Materials in einem Materialstrom. Hierbei werden fortlaufend Proben des Materials entnommen, jede Probe wird gewogen, einem Vakuum ausgesetz, unter Erwärmung getrocknet und erneut gewogen, woraus der Gewichtsverlust ermittelt wird.

US Patent Nr. 4,430,963 beschreibt ein System und ein Verfahren zum Bestimmen des Feuchtigkeitsgehalt von Kohle, wobei das Gewicht eines Volumenstroms dieser Kohle mit bekanntem Durchschnitt und Geschwindigkeit gemessen wird.

EP-A-0 095 293 beschreibt eine Sandklassifikationsanlage und ein Verfahren zur Prozesskontrolle der Anlage. Bei dem Verfahren werden Behälterstationen derart mit unterschiedlichen Sandfraktionen beladen und entladen, daß ein Fehlen einer Fraktion kompensiert werden kann.

Die Aufgabe der Erfindung besteht darin, den Flüssigkeitsgehalt eines rohen Granulats reproduzierbar und zuverlässiger zu bestimmen, und schafft dazu ein Verfahren nach Anspruch 1.

Vorteilhafte Weiterbildungen des Verfahrens nach der Erfindung sind dargelegt in den Anspruchen 2-4.

Dadurch, daß das Gewicht des Granulats faktisch kontinuierlich gemessen wird, kann man den Flüssigkeitsgehalt des Granulatstroms kontinuierlich feststellen, indem das Trockengewicht von einem dementsprechenden Volumen subtrahiert wird. Dieses Trockengewicht kann zum Beispiel mit Hilfe einer Probe aus dem Vorrat des Granulats bestimmt werden, bevor es als kontinuierlicher Strom transportiert wird, oder während genannten Transport. Es ist aus Genauigkeitsgründen in letztgenanntem Fall durchaus bevorzugt, daß die Daten des Trockengewichts verfügbar sind, bevor das betreffende Naßgewicht abgewogen wird. Genanntes Trockengewicht kann zum Beispiel mit der obengenannten "Trocknen-Wiegen-Trocknen"-Technik bestimmt werden.

Mit Vorteil wird die Probe aber dem Granulatstrom dort entzogen, wo das Gewicht des Stroms gemessen wird. Das Trockengewicht pro Volumeneinheit der Probe kann zum Beispiel durch die "Wiegen-Trocknen-Wiegen"-Technik bestimmt werden. Selbstverständlich ist die in dem Granulat vorhandene Flüssigkeit nicht besonders beschränkt, jedoch wird dies meistens Wasser oder wäßrige Flüssigkeiten sein.

In vielen Fällen ist das Trockengewicht des Granulats als zuverlässiger Erfahrungswert bekannt, so daß von dem Material keine Probe entnommen werden braucht, um das Trockengewicht experimentell zu bestimmen. Insbesondere für Sand mit einer bestimmten Korngröße gibt es zuverlässige Erfahrungswerte für dessen Trockengewicht. Diese Werte befinden sich abhängig von der Korngrößenverteilung in der Regel zwischen 1,3 und 1,8 g/ml.

Ohne wiederholt Proben zum Bestimmen des Trockengewichts entnehmen zu brauchen, kann also der Flüssigkeitsgehalt eines kontinuierlichen Granulatstroms ununterbrochen gemessen werden, was eine erhebliche Kosten- und Zeiteinsparung bringt und ein echtes kontinuierliches Dosierverfahren ermöglicht.

Zum Bestimmen des Flüssigkeitsgehalts gemäß des Verfahrens der vorliegenden Erfindung wird das Granulat vorzugsweise aus einer Zufuhrvorrichtung, wie einem Behälter oder Trichter in einem kontinuierlichen Strom an eine Transportvorrichtung, wie ein Fließband, abgegeben, von welchem Strom die Querschnittsfläche bestimmt wird. Die Höhe und Breite des Stroms kann zum Beispiel mit Hilfe von optischen oder akustischen Sensoren gemessen werden, aus denen die Querschnittsfläche berechnet werden kann. Ist die Querschnittsfläche des Granulatstroms bekannt, so kann das Volumen in einfacher Weise dadurch bestimmt werden, daß die Weglänge mit der Querschnittsfläche des Granulatstroms multipliziert wird. Mit Hilfe zum Beispiel eines Wägesensors, der über eine bestimmte Weglänge des Fließbandes den Granulatstrom wiegt, kann ein definiertes Volumen abgewogen werden, wodurch das Naßgewicht pro Volumeneinheit berechnet werden kann. Mit Vorteil wird das Granulat mit einer definierten Querschnittsfläche an die Transportvorrichtung abgegeben. Übrigens kann die Transportvorrichtung ebenfalls wie eine andersartige Transportvorrichtung, wie zum Beispiel wie eine geneigte Ebene mit begrenzter Breite ausgeführt sein. Die Höhe des Stroms kann zum Beispiel dadurch eingestellt werden, daß stromaufwärts des Wägesensors über dem Fließband ein Abstreichmesser angeordnet wird, wobei der Abstand des Abstreichrandes des Abstreichmessers und das Fließband die Schichtdicke definiert. Die Breite des Granulatstroms kann zum Beispiel durch Anordnung von zwei, sich im Abstand gegenüberliegenden Führungsschotten, die in Längsrichtung über dem Fließband angeordnet sind bestimmt werden, wobei der Abstand zwischen den Schotten die Breite des Granulatstroms definiert. Wenn ein Behälter oder eine derartige Zufuhrvorrichtung über dem Fließband angeordnet ist, kann die Ausströmöffnung die Querschnittsfläche definieren. Bei einer derartig definierten Querschnittsfläche sind vorhergenannte Sensoren überflüssig. Übrigens sind Wägevorrichtungen zum Abwiegen eines Teilvolumens eines über ein Fließband transportierten Materials in dem Fachbereich allgemein bekannt.

Vorzugsweise wird die Transportgeschwindigkeit des Stroms abhängig von dem Flüssigkeitsgehalt geregelt. Das Einstellen der Transportgeschwindigkeit ist wichtig, wenn zum Beispiel eine bestimmte stromabwärts der Wägung ausgeführte Bearbeitung von dem Flüssigkeitsgehalt abhängig ist. Sobald sich der Flüssigkeitsgehalt ändert, kann man durch das Ändern der Transportgeschwindigkeit, die Zufuhr des Granulats anpassen.

Im Falle zum Beispiel eines rohen Granulats als Ausgangsmaterial, wobei das Granulat hinsichtlich der Partikelgrößenverteilung sehr variierende Werte aufweist, oder sonstwie sehr variiert, ist es vorteilhaft, wenn das Granulat zur Bestimmung des Flüssigkeitsgehalts in Fraktionen von unterschiedlicher Partikelgrößenverteilung getrennt wird, und daß die Flüssigkeitsgehalte einer oder mehrerer Fraktionen einzeln bestimmt wird. Durch das Granulat in einer übrigens im Fachbereich allgemein bekannten Weise in Fraktionen mit unterschiedlicher Partikelgrößenverteilung zu trennen, wird der Granulatstrom von einer homogenen Zusammensetzung sein, wodurch über längere Zeit reproduzierbare und zuverlässige Feuchtigkeitsmessungen möglich sind. Je schmäler die Partikelgrößenverteilungsbegrenzung der Fraktionen, desto zuverlässiger kann man den Flüssigkeitsgehalt der betreffenden Fraktion bestimmen.

Außerdem sind, wie vorher angegeben, meistens zuverlässige Erfahrungswerte des Trockengewichts von Granulaten mit einer bestimmten Partikelgrößenverteilung bekannt, so daß dann auf eine Bestimung des Trockengewichts verzichtet werden kann.

Vorzugsweise werden die Daten einerseits der Messungen, beziehungsweise Bestimmungen für das Naßgewicht, und andererseits der Erfahrungswerte, oder aber Meß- und Bestimmungsdaten des Trockengewichts des Granulats in eine Datenverarbeitungseinheit eingegeben, die genanntes Naßgewicht und den Flüssigkeitsgehalt des Granulats berechnet. Mit Hilfe einer Datenverarbeitungseinheit, wie eines Computers, können den Meßdaten die erforderliche Berechnung unterzogen werden und miteinander verglichen werden, wodurch der Flüssigkeitsgehalt in einfacher Weise automatisch festgestellt werden kann.

Die Erfindung bezieht sich weiter auf ein Verfahren zum Dosieren eines Granulats auf Basis dessen Gewichts, unter Anwendung einer Korrektur für den Flüssigkeitsgehalt, welcher Flüssigkeitsgehalt mit dem Verfahren gemäß einem oder mehreren der vorhergehenden Ansprüche bestimmt wird. Das Verfahren zum Bestimmen des Flüssigkeitsgehalts in einem Granulat gemäß der vorliegenden Erfindung ist außerordentlich geeignet zum Dosieren des Granulats auf Basis dessen Trockensubstanzgehalts.

Meistens ist für eine bestimmte Bearbeitung eine bestimmte Granulatmenge erforderlich. Bei einem hohen Flüssigkeitsgehalt wird man, wenn man auf Basis von Gewicht dosiert, zu wenig Granulat dosieren. Wenn man dagegen von einem bestimmten Flüssigkeitsgehalt ausgeht, und der Flüssigkeitsgehalt des zugeführten Granulats läßt während der Bearbeitung nach, so wird zuviel Granulat dosiert. Durch den Flüssigkeitsgehalt des kontinuierlichen transportierten Granulatstroms gemäß des Verfahrens der vorliegenden Erfindung zu bestimmen, kann man in einfacher Weise den Feuchtigkeitsgehalt und deshalb den Trockensubstanzgehalt berechnen, wie oben bereits dargelegt worden ist. Auf Basis des zum Beipiel kontinuierlich berechneten Flüssigkeitsgewichtsprozentsatzes kann eine gewünschte Granulatmenge auf Basis dessen Trockensubstanzgehalts dosiert werden.

Vorzugsweise umfaßt die Korrektur des Flüssigkeitsgehalts eine Anpassung der Transportgeschwindigkeit des Granulatstroms. Sobald ein hoher Flüssigkeitsgehalt in dem Granulat festgestellt wird, kann man das Granulat mit einer entsprechend höheren Dosiergeschwindigkeit der betreffenden Bearbeitung zuführen, wodurch die gewünschte Zufuhr an Granulat auf Basis dessen Trockensubstanzgehalts gewährleistet bleibt. Sobald der Flüssigkeitsgehalt des zugeführten Granulatstroms nachläßt, was impliziert, daß pro Gewichtseinheit mehr Granulat vorhanden ist, kann die Transportgeschwindigkeit des Granulatstroms zum Beispiel in Tonnen/h dementsprechend gesenkt werden.

Es ist aber auch möchlich, die Transportgeschwindigkeit nicht an eine Flüssigkeitsvariation in dem Granulat anzupassen, sondern durch zum Beispiel die Zufuhr an einem früheren, beziehungsweise späteren Zeitpunkt zu unterbrechen, sobald die gewünschte Granulatmenge der Bearbeitung zugeführt ist.

Ein kontinuierliches Bearbeitungsverfahren, in dem die Flüssigkeitsbestimmung gemäß dieser Erfindung mit großem Vorteil angewendet werden kann, wird in der gleichzeitig mit dieser Anmeldung eingereichten niederländischen Patentanmeldung NL-A-1 006 806 der Anmelderin beschrieben, in der ein Verfahren zum kontinuierlichen Fördern einer rohen Sandmischung beschrieben wird, wobei diese rohe Sandmischung in Fraktionen mit unterschiedlicher Partikelgrößenverteilung getrennt wird und die einzelnen Fraktionen verwendet werden, um in einer kontinuierlichen Weise eine Sandmischung mit einer bestimmten Rezeptur zusammenzusetzen. Bei der Zusammensetzung einer derartigen Rezeptur sollten die einzelnen Fraktionen auf Basis dessen Trockengewichts zum Erhalten einer Sandmischung mit vorgeschriebener Zusammensetzung dosiert werden. Bei einem kontinuierlichen Förderverfahren ist eine kontinuierliche Flüssigkeitsmessung unentbehrlich.

In einem anderen Aspekt der vorliegenden Erfindung wird deshalb ein Verfahren zum Dosieren eines oder mehrerer kontinuierlicher Sandströme mit jeweils einer bestimmten Partikelgrößenverteilung, unter Anwendung des Dosierens und Bestimmens des Flüssigkeitsgehalts der einzelnen Sandströme gemäß der vorliegenden Erfindung vorgesehen.

Vorzugsweise werden Daten des Flüssigkeitsgehalts des Granulats in eine Datenverarbeitungseinheit eingegeben, auf Basis deren die Einheit die Trockengranulatmenge berechnet und die Feuchtigkeitskorrektur anwendet, indem die Dosierung auf Basis des Gewichts des Trockengranulats angesteuert wird. Dieses Ansteuern kann durch die Beschleunigung, beziehungsweise Verzögerung der Transportgeschwindigkeit des Granulatstroms, oder durch eine Verlängerung, beziehungsweise Verkürzung der Transportzeitdauer erfolgen.

Ein folgender Aspekt der Erfindung bezieht sich auf eine Vorrichtung zum Bestimmen des Flüssigkeitsgehalts in einem Granulat, das im wesentlichen unlöslich in der Flüssigkeit und inert für die Flüssigkeit ist, umfassend
- Zufuhrmittel für das Granulat,
- Transportmittel zum, als kontinuierlicher Strom, Transportieren des Granulats,
- Mittel zum Definieren der Querschnittsfläche des Stroms,
- Wägemittel zum in dem Strom Bestimmen des Gewichts eines definierten Teilvolumens des Granulatstroms.

Eine derartige Vorrichtung ist überaus geeignet für die Ausführung des Verfahrens gemäß der vorliegenden Erfindung.

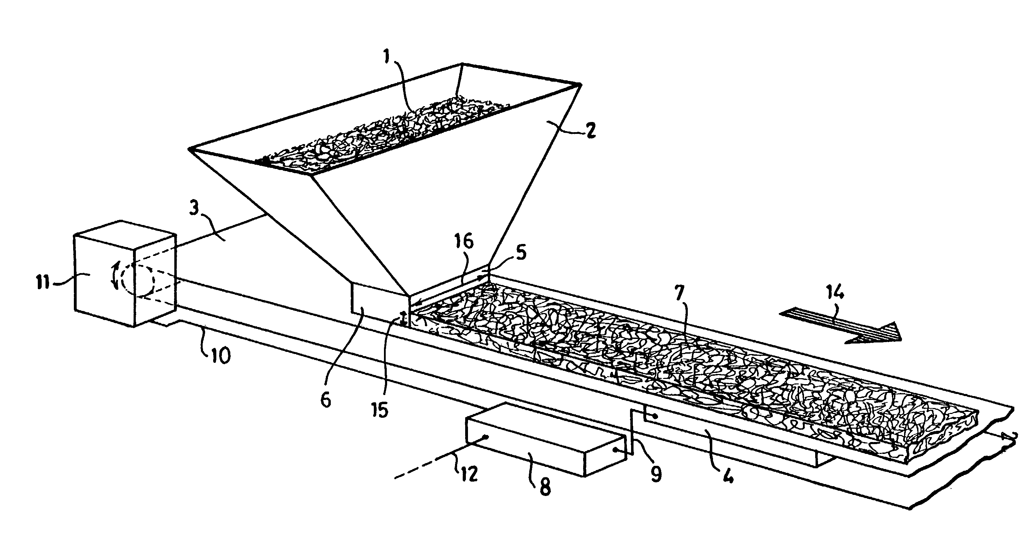

Der Hintergrund der Erfindung wird anhand der beigefügten Zeichnung näher erläutert, in der die Figur eine schematische Darstellung einer vereinfachten Ausführungsform der Vorrichtung zeigt.

Ein Granulat 1 befindet sich in einem Behälter 2 (einem Zufuhrtrichter), der über einem Fließband 3 angeordnet ist, dessen Transportrichtung mit einem Pfeil 14 angedeutet ist. Die Abgabeöffnung des Behälters 2 wird von einer Wand 5 begrenzt, deren unterer Rand sich auf Abstand zum Fließband 3 befindet, welcher Abstand die Schichtdicke des abzugebenden Granulats 7 bestimmt, was mit einem Doppelpfeil 15 dargestellt ist, und von Seitenwänden 6, die sich bis in der nähe der Oberfläche des Fließbandes erstrecken, welche die Breite des Granulatstroms 7 definieren, was mit einem Doppelpfeil 16 angedeutet worden ist.

Beim Betrieb bewegt sich das Fließband 3 in der Richtung des Pfeils 14, wodurch ein kontinuierlicher Granulatstrom 7 mit einer definierten Höhe und Breite gebildet wird. Ein Teilvolumen des Granulatstroms 7 wird von einer Wägevorrichtung 4 gewogen. Die Wägevorrichtung 4 is mit einer Rechenvorrichtung 8, in die die Wägedaten über eine Leitung 9 eingegeben werden, verbunden. Über eine Leitung 12 können Bezugswerte, wie das Trockengewicht des Granulats in die Rechenvorrichtung eingegeben werden. Vorzugsweise werden Erfahrungswerte für das Trockengewicht eingegeben. Wenn jedoch keine zuverlässige Erfahrungswerte bekannt sind, kann zum Beispiel eine Probe für die Bezugswerte dem Granulat entnommen werden, das sich in Behälter 2 befindet, oder zum Beispiel dem Granulat, das gerade aus dem Behälter 2 an das Transpostband 3 abgegeben wird, jedoch vorzugsweise an der Stelle der Wägevorrichtung 4. Die Rechenvorrichtung 8 berechnet anschließend den Flüssigkeitsgehalt des gerade gewogenen Granulats und anhand des berechneten Wertes kann die Rechenvorrichtung 8 zum Beispiel über eine Leitung 10 einen Antriebsmotor 11 für das Fließband 3 ansteuern.

## Patentansprüche

1. Verfahren zum Bestimmen des Flüssigkeitsgehalts in einem Granulat (1), insbesondere Sand und/oder Kies, das im wesentlichen unlöslich in der Flüssigkeit und inert für die Flüssigkeit ist, bei dem das Granulat (1) als kontinuierlicher Strom (7) transportiert wird, von welchem Granulat (1) das Trockengewicht bekannt ist, oder durch Probenentnahme bestimmt wird, wobei
- das Gewicht eines definierten Teilvolumens des Stroms in dem Strom (7) gemessen wird, aus dem das Naßgewicht pro Volumeneinheit abgeleitet wird,
- der Unterschied zwischen genanntem Naßgewicht und Trockengewicht berechnet wird, wobei der Unterschied das Gewicht an Flüssigkeit pro Volumeneinheit in dem Granulat (1) darstellt, **dadurch gekennzeichnet, daß** das Granulat (1) zur Bestimmung des Flüssigkeitsgehalts in Fraktionen unterschiedlicher Partikelgrößenverteilung getrennt wird, und daß die Flüssigkeitsgehalte einer oder mehrerer Fraktionen bestimmt wird.

2. Verfahren nach Anspruch 1, **dadurch gekennzeichnet, daß** das Granulat (1) von einer Zufuhrvorrichtung (2) aus in einem kontinuierlichen Strom an eine Transportvorrichtung (3) abgegeben wird, von welchem Strom (7) die Querschnittsfläche bestimmt wird.

3. Verfahren nach Anspruch 1 oder 2, **dadurch gekennzeichnet, daß** das Granulat (1) von einer Zufuhrvorrichtung (3) aus in einem kontinuierlichen Strom (7) mit einer definierten Querschnittsfläche an die Transportvorrichtung abgegeben wird.

4. Verfahren nach einem der vorhergehenden Ansprüche, **dadurch gekennzeichnet, daß** die Transportgeschwindigkeit des Stroms (7) abhängig vom dem Flüssigkeitsgehalt geregelt werden.

5. Verfahren zum Dosieren von Granulat (1) auf Basis dessen Gewichts, unter Anwendung einer Korrektur für den Flüssigkeitsgehalt, welcher Flüssigkeitsgehalt mit dem Verfahren nach einem oder mehreren der vorhergehenden Ansprüche bestimmt wird.

6. Verfahren nach Anspruch 5, **dadurch gekennzeichnet, daß** die Korrektur des Flüssigkeitsgehalts eine Anpassung der Transportgeschwindigkeit des Granulatstroms (7) umfaßt.

7. Verfahren zum Dosieren eines oder mehrerer kontinuierlicher Sandströme mit jeweils einer bestimmten Partikelgrößenverteilung unter Anwendung eines Verfahrens nach einer der vorhergehenden Ansprüche.

8. Vorrichtung zur Ausführung des Verfahrens nach Anspruch 1, zum Bestimmen des Flüssigkeitsgehalts in einem Granulat (1), das im wesentlichen unlöslich in der Flüssigkeit und inert für die Flüssigkeit ist, umfassend
- Zufuhrmittel (2) für das Granulat (1),
- Transportmittel (3) zum, wie ein kontinuierlicher Strom, Transportieren des Granulats,
- Mittel (5, 6) zum Definieren der Querschnittsfläche (15, 16) des Stroms,
- Wägemittel (4) zum in dem Strom Bestimmen des Gewichts eines definierten Teilvolumens des Granulatstroms.

## Claims

1. Method for determining the fluid content in a granulated material (1), in particular sand and/or gravel, that is substantially insoluble in the fluid and inert to the fluid, in which method the granulated material (1) is conveyed as a continuous flow (7), the dry weight of the granulated material (1) being known, or being determined by sampling,
- the weight of a defined partial volume of the flow is measured in the flow (7), from which the weight when wet per unit volume is derived,
- the difference between said weight when wet and dry weight is calculated, wherein the difference represents the fluid weight per unit volume in the granulated material (1), **characterized in that**, for the determination of the fluid content, the granulated material (1) is separated into fractions having different particle size distributions, and **in that** the fluid contents of one or more fractions is determined.

2. Method according to claim 1, **characterized in that** the granulated material (1) is delivered in a continuous flow from a supply device (2) to a conveyor device (3), wherein the cross-sectional area of the flow (7) is determined.

3. Method according to claim 1 or 2, **characterized in that** the granulated material (1) is discharged in a continuous flow (7) with a defined cross-sectional area from a supply device (3) to the conveyor device.

4. Method according to one of the preceding claims, **characterized in that** the conveyor velocity of the flow (7) is controlled in dependence of the fluid content.

5. Method for dosing granulated material (1) on the basis of the weight thereof, using a correction for the fluid content, which fluid content is determined with the method according to one more of the preceding claims.

6. Method according to claim 5, **characterized in that** the correction of the fluid content comprises an adjustment of the conveyor velocity of the flow (7) of granulated material.

7. Method for dosing one or more continuous flows of sand, each with a predetermined particle size distribution, using a method according to one of the preceding claims.

8. Device for carrying out the method according to claim 1, for determining the fluid content in a granulated material (1), that is substantially insoluble in the fluid and inert to the fluid, comprising
- supply means (2) for the granulated material (1)
- conveyor means (3) for conveying the granulated material as a continuous flow,
- means (5), (6) for defining the cross-sectional area (15, 16) of the flow,
- weighing means (4) for determining in the flow the weight of a defined partial volume of the flow of granulated material.

## Revendications

1. Procédé de détermination de la teneur en liquide dans un granulat (1), en particulier du sable et/ou des gravillons, qui est substantiellement insoluble dans le liquide et inerte au liquide, dans lequel le granulat (1) est transporté comme un courant continu (7), le poids sec du granulat (1) étant connu ou déterminé par prélèvement, dans lequel
- le poids d'un volume partiel défini du courant est mesuré dans le courant (7) à partir duquel le poids humide par unité de volume est dérivé,
- la différence entre ledit poids humide et le poids sec est calculée, la différence représentant le poids en liquide par unité de volume dans le granulat (1), **caractérisé en ce que** pour la détermination de la teneur en liquide, le granulat (1) est divisé en fractions avec une répartition dimensionnelle différente des particules, et **en ce que** les teneurs en liquide d'une ou de plusieurs fractions sont déterminées.

2. Procédé selon la revendication 1, **caractérisé en ce que** le granulat (1) est délivré dans un courant continu d'un dispositif d'alimentation (2) à un dispositif de transport (3), la superficie de la section du courant (7) étant déterminée.

3. Procédé selon la revendication 1 ou 2, **caractérisé en ce que** le granulat (1) est délivré au dispositif de transport à partir d'un dispositif d'alimentation (3) dans un courant continu (7) avec une superficie de la section définie.

4. Procédé selon l'une quelconque des revendications précédentes, **caractérisé en ce que** la vitesse de transport du courant (7) est régulée en fonction de la teneur en liquide.

5. Procédé de dosage d'un granulat (1) sur la base de son poids, en utilisant une correction pour la teneur en liquide, ladite teneur en liquide étant déterminée par le procédé selon l'une quelconque ou plusieurs des revendications précédentes.

6. Procédé selon la revendication 5, **caractérisé en ce que** la correction de la teneur en liquide comprend une adaptation de la vitesse de transport du courant de granulat (7).

7. Procédé de dosage d'un ou de plusieurs courants continus de sable avec respectivement une répartition dimensionnelle donnée des particules en utilisant un procédé selon l'une quelconque des revendications précédentes.

8. Dispositif de mise en oeuvre du procédé selon la revendication 1, pour le dosage de la teneur en liquide dans un granulat (1) qui est substantiellement insoluble dans le liquide et inerte au liquide, comprenant
- des moyens d'alimentation (2) pour le granulat (1),
- des moyens de transport (3) pour transporter le granulat comme un courant continu,
- des moyens (5, 6) pour définir la superficie de la section (15, 16) du courant,
- des moyens de pesée (4) pour déterminer dans le courant le poids d'un volume partiel défini du courant de granulat.
